# EUROPEAN PATENT APPLICATION

(11) **EP 4 437 824 A1**
(43) Date of publication of application: **02.10.2024**
(21) Application number: 23165046.6
(22) Date of filing: 29.03.2023
(51) Int. Cl.: A01C 1/04, A01G 24/44, A01G 24/22, A01G 24/28

(54) **A SHEET SUBSTRATE, A GROWING ARRANGEMENT AND A METHOD FOR PRODUCING A SHEET SUBSTRATE**

(71) Applicant: Click & Grow OÜ, 50603 Tartu (EE)
(72) Inventor: Järvekülg, Martin, 50603 Tartu (EE); Kangur, Triin, 50603 Tartu (EE); Harend, Helery, 50603 Tartu (EE)
(74) Representative: Primrose Oy

(57) **Abstract**

The invention relates to a sheet substrate (1) for growing micro greens (2) in a substrate support (10) of an indoor garden device and a growing arrangement for growing microgreens and a method to produce a sheet substrate (1). The sheet substrate (1) comprises a cellulosic material mass (30), and plant seeds (20) embedded in the cellulosic material mass (30) forming the sheet substrate (1). The sheet substrate (1) having a single-layer structure formed by the cellulosic material mass (30) in such a way that substances of the cellulosic material mass (30) form an intertwined structure in a compressed form, the intertwined structure keeping the plant seeds (20) embedded to the sheet substrate (1).

## Description

### FIELD OF THE INVENTION

The present invention relates to a sheet substrate, and more particularly to a sheet substrate according to the preamble of the independent claim 1.

The present invention further relates to a growing arrangement, and more particularly to a growing arrangement according to the preamble of the independent claim 9.

The present invention further relates a method for producing a sheet substrate, and more particularly to a method for producing a sheet substrate according to the preamble of the independent claim 10.

### BACKGROUND OF THE INVENTION

Prior art teaches to use seed mats for growing microgreens. Seed mats contain seeds glued to a thin cellulose mat and a thin paper layer is attached to cover the seeds to form a layered structure. A thin paper layer can be attached as a top layer by gluing it together with the seeds or otherwise using adhesive to attach the thin paper layer. Water is poured directly onto the seed mat from above to start the growth process of the microgreens. Publication US2012036772A1 discloses a typical seed mat.

Prior art also teaches a ready-made bed for planting grass-like crops in which two layers are bonded together such that seeds are between the layers and the bonding is performed by placing the layers in contact with each other and bonded by means of a felting process with a felting machine. Publication WO 9607309A1 describes the process.

One of the problems associated with the prior art is that the layered structure of the growing medium for microgreens usually requires active watering on top of the growing medium so that the water reaches each layer in the structure evenly.

### BRIEF DESCRIPTION OF THE INVENTION

An object of the present invention is to provide a sheet substrate which solves or at least alleviates the problems of the prior art. Another object of the present invention is to provide a sheet substrate which is ready to use in an indoor garden device.

The objects of the invention are achieved by a sheet substrate, a growing arrangement, and a method for producing a sheet substrate which are characterized by what is stated in the independent claims. The preferred embodiments of the invention are disclosed in the dependent claims.

The invention is based on the idea of providing a sheet substrate for growing microgreens which the sheet substrate comprises a cellulosic material mass, and plant seeds embedded in the cellulosic material mass forming the sheet substrate. The sheet substrate having a single-layer structure formed by the cellulosic material mass in such a way that substances of the cellulosic material mass form an intertwined structure in a compressed form, the intertwined structure keeping the plant seeds embedded to the sheet substrate.

In other words, the sheet substrate is a growing medium for microgreens and therefore the substrate is sheet-like thin because the microgreens do not require space for the roots. The sheet substrate can be provided in different forms, for example in a circular form, a rectangular form, or a square form. However, the sheet substrate is preferably a substrate that extends like a mat so that it is relatively thin and has a large surface area in relation to its thickness. The shape, i.e., the form, of the sheet substrate is ideal particularly for microgreens, which do not need space in the direction of the thickness of the sheet substrate, but which are typically grown on a large surface area. The surface area is large compared to the thickness of the sheet substrate. Maximum size of a sheet substrate in width and length wise is 200 mm x 200 mm or a diameter of 200 mm because larger sheet substrates are difficult to handle when they are set to use or removed from use. An optimum size of the sheet substrate is preferably 100 mm x 100 mm or 100 mm in diameter, or even 50 mm x 50 mm or 50 mm in diameter. In other words, optimum diameter for a sheet substrate is between 50 mm - 100 mm. The sheet substrate does not need to be circular, so the diameter range applies also to a side length of a sheet substrate. This is because the sheet substrates are preferably used in indoor garden devices or other devices in which the sheet substrates are arranged on a tray or in a pot for growing microgreens. In these devices, the sheet substrates are preferably watered through a bottom surface of the sheet substrate, which the bottom surface is the opposite surface to a growth surface, through which the microgreens protrude.

Microgreens are vegetable greens which are harvested just after the cotyledon leaves have developed with one set of true leaves and they are harvested without the roots. Microgreens are not sprouts or shoots which are germinated or partially germinated seeds and consists of the seed, root, and stem. Microgreens are smaller than so called "baby greens" because they are harvested very soon after sprouting, rather than after the plant has matured to produce multiple leaves. Microgreens have three basic parts: a central stem, cotyledon leaf or leaves, and typically, the first pair of very young true leaves. The typical size of microgreens is between 25 to 38 mm and the average crop-time for microgreens is 10-14 days from seeding to harvest. Some slower growing microgreens can take approximately even 3 weeks to be harvestable.

According to the invention thickness of the sheet substrate comprising embedded plant seeds in the compressed form is between 2 mm - 20 mm, or preferably between 2 mm - 10 mm, or most preferably between 3 mm - 8 mm.

In other words, the thickness of the sheet substrate comprising embedded seeds ranges from 2 mm - 20 mm in a dry state. The preferred thickness of the sheet substrate is 2 mm - 10 mm, and the most preferred thickness of the sheet substrate is 3 mm - 8 mm. The thickness range of the sheet substrate varies, for example, depending on what size of plant seeds are mixed with the cellulosic material mass so that they remain embedded in the sheet substrate. So, the thickness range of the sheet substrate depends on the seed diameter used in connection with the sheet substrate because the thickness of the sheet substrate cannot be less than the diameter of the seed and therefore 2 mm is the minimum thickness of the sheet substrate. Another aspect of the minimum thickness of the sheet substrate is that the sheet substrate must be able to be packed as a single sheet substrate without breaking it, and on the other hand, when using it, it must be possible to remove the sheet substrate from its packaging without breaking it and put it in use for example in the indoor garden device.

According to the invention the cellulosic material mass comprises at least one of the following paper pulp, hemp, cotton, wood pulp, coconut pulp, bamboo, cotton fibres, coir, coco peat, jute, hemp, hair, wool, other lignocellulosic plant material, cellulosic fibre, mechanical pulp, thermomechanical pulp (TMP), chemical pulp, Kraft pulp, recycled pulp, and old corrugated cardboard (OCC).

According to the invention the intertwined structure of the cellulosic material mass is formed by mechanical treatment of the whole volume of the cellulosic material mass to form the sheet substrate with the single-layer structure.

In other words, the cellulosic material mass is mechanically treated to provide the intertwined structure to the cellulosic material mass. The mechanical treatment is performed to the whole volume of the cellulosic material mass forming the sheet substrate. The single layer structure is accomplished by mechanically treating the whole volume of the cellulosic material mass. One example of the mechanical treatment of the whole volume of the cellulosic material mass is pressing the cellulosic material mass against a hard smooth surface with a smooth flat surface which the pressing of the cellulosic material mass between the surfaces modifies the cellulosic material mass so that the substances of the cellulosic material mass form the intertwined structure. The intertwined structure is formed when cellulosic material mass substances get entangled when moist and as the substances dry, they stick together and adhere to each other without any adhesives. This entanglement between the substances of the cellulosic material mass corresponds to the felting effect. Another additional or alternative example of mechanical treatment of the whole volume of the cellulosic material mass is punching and/or pricking the cellulosic material mass with a needle or a similar narrow-headed tool. If the fibrous substances of the cellulosic material mass have relatively small and short particles then it is more advantageous to just press, but if the fibrous substances have longer fibres, then punching and/or pricking would be advantageous in addition to pressing.

Mechanical treatment is performed on the entire volume of the cellulosic material mass when it is moist, i.e., before it is dried to a dry state so that its water content is less than 20%. The dry state means that the water content is so low that it does not cause germination of the plant seeds. The mechanical treatment is performed on the moist cellulosic material mass and moisture is provided to the cellulosic material mass by adding the cellulosic material mass, such as dry paper pulp, to water, for example on a ratio 8% of cellulosic material mass and 92% water. The cellulosic material mass, which is fibrous cellulosic material mass, adheres and holds together due to entanglement of fibrous cellulosic material mass substances without any separate adhesives. All the water has to be absorbed into the cellulosic material mass and there can be no free water in the mass. Since different cellulosic materials can be used in the cellulosic material mass of the sheet substrate, the water content varies between 20% - 95% in the moist cellulosic material mass which is processed mechanically on the entire volume in such a way that the fibrous substances get entangled.

According to the invention the substances of the cellulosic material mass are fibrous substances forming the intertwined structure of the sheet substrate.

In other words, the substances of the cellulosic material mass have a fibrous structure that comprises filaments capable of entwining with each other to form the intertwined structure. The filaments absorb liquid which contributes to the stability of the intertwined structure. Absorption causes the filaments to swell and as the cellulosic material mass dries to the dry state after pressing the swelling reverts so that the branched particles of the cellulose material mass that were swollen will tightly intertwine and attach to each other by inter-particle entanglement.

According to the invention the plant seeds are embedded in the fibrous substances of the cellulosic material mass, and the intertwined structure of the fibrous substances is arranged to secure the seeds in the sheet substrate.

In other words, the plant seeds are provided within the sheet substrate or inside the sheet substrate such that they are embedded in the cellulosic material mass. The intertwined structure captures the plant seeds in the cellulosic material mass such that they remain embedded in the sheet substrate without the need of adhesives to hold them in the sheet substrate.

According to the invention the plant seeds are entangled in the cellulosic material mass, and the intertwined structure of the cellulosic material mass is arranged to secure the plant seeds in the sheet substrate.

In other words, the plant seeds can be entangled in the cellulosic material mass for example because of the properties of the cellulosic material itself, such as multiple filaments in the fibrous structure. The intertwined structure formed between the fibrous substances of the cellulosic material mass further secure the plant seeds in the sheet substrate.

According to the invention the plant seeds are embedded in the sheet substrate. Alternatively, the plant seeds are completely embedded inside the sheet substrate. Still alternatively the plant seeds are at least partially embedded inside the sheet substrate.

In other words, the plant seeds being embedded in the sheet substrate or being completely embedded inside the sheet substrate or being at least partially embedded inside the sheet substrate means that the sheet substrate comprises plant seeds that are provided within the sheet substrate, i.e., inside the sheet substrate. The intertwined structure formed by the substances of the cellulosic material mass embed at least part of the plant seeds inside the sheet substrate when the single-layer structure of the sheet substrate is formed by pressing the cellulosic material mass having the plant seeds. Therefore, at least part of the plant seeds is inside the sheet substrate when the single-layer structure is formed and the substances of the cellulosic material mass form the intertwined structure in the compressed form.

The sheet substrate according to the invention having the single-layer structure comprises an upper surface on one side of the single-layer structure and a lower surface on the other opposite side of the single-layer structure. The intertwined structure of the substances of the cellulosic material mass extends throughout the single-layer structure. The plant seeds embedded in the single-layer structure of the sheet substrate protrude through the upper surface of the sheet substrate, growing as microgreens. The cellulosic material mass formed as the single-layer structure compressed sheet substrate is preferably watered through the side of the sheet substrate that is away from the growth direction of the microgreens, so that the microgreens do not be harmed by the watering, the side to be watered being thus the lower surface of the sheet substrate.

The invention is further based of providing a growing arrangement for growing microgreens in an indoor garden device. The growing arrangement comprises a substrate support and a substrate containing plant seeds, the substrate support comprises a place for the substrate and a wick, which is arranged to form a flow connection from outside of the substrate support to the substrate arranged in the substrate support. The substrate support and the substrate are to be placed to the indoor garden device. The substrate is a sheet substrate according to any of the embodiments described above.

In other words, the sheet substrate disclosed above is arranged to be used in an indoor garden device such that the sheet substrate is placed at a substrate support having a wick for supplying liquid, and especially water, to the sheet substrate through the lower surface of the sheet substrate, which has been placed against the substrate support. Watering below the sheet substrate means that the sheet substrate has an upper surface from which the plants protrude when growing from the sheet substrate, and opposite the upper surface is a lower surface through which water is absorbed into the sheet substrate. The sheet substrate is provided at the substrate support such that the lower surface of the sheet substrate is against the substrate support, and the wick communicates with the sheet substrate through the substrate support and provides liquid to the lower surface of the sheet substrate. The wick supplies liquid by capillary action from a tank of the indoor garden device to the sheet substrate arranged to the substrate support. Thereby, the sheet substrate need not to be watered through the upper surface of the sheet substrate. The wick can be a bunch of very fine fibers arranged to carry liquid by capillary action or fine channels between the fibres or a single channel providing a path for liquid to the substrate.

The invention is further based of a method for producing a sheet substrate for growing microgreens, which the method comprises the following steps: a) obtaining a moist cellulosic material with a water content of 20-95% by mass by adding liquid to the cellulosic material mass, b) arranging plant seeds to the cellulosic material mass, c) arranging the cellulosic material mass on a surface of a base, and d) applying a compressive force to the cellulosic material mass arranged on the surface of the base to form a single-layer sheet substrate having plant seeds embedded in the single-layer sheet substrate.

In other words, the cellulosic material mass, which comprises at least one of the following: paper pulp, hemp, cotton, wood pulp, coconut pulp, bamboo, cotton fibres, coir, coco peat, jute, hemp, hair, wool, other lignocellulosic plant material, cellulosic fibre, mechanical pulp, thermomechanical pulp (TMP), chemical pulp, Kraft pulp, recycled pulp, and old corrugated cardboard (OCC), is treated with liquid and preferably water or water-based liquid such that the cellulosic material fully absorbs the added liquid and becomes moist without any unabsorbed liquid. The water or water-based liquid swells the cellulosic material and expands the fibrous structures of the cellulosic material. This enhances the entanglement between the fibrous substances and attaches them together when the cellulosic material mass is finally dried.

In the method the plant seeds are added to the cellulosic material mass such that they become at least partly embedded in the cellulosic material mass and are secured in an intertwined structure of the cellulosic material mass.

In the method, the single-layer sheet substrate, where the plant seeds are embedded in the sheet substrate, is obtained by pressing the cellulosic material mass against the surface of the base, whereby the plant seeds arranged in the cellulosic material mass sink into the sheet substrate, embedding into it as the cellulosic material mass is pressed together by the effect of the compressive force applied to it, and at the same time the substances of the cellulosic material mass are intertwined due to compression, attaching the plant seeds to the fibrous structure of the formed sheet substrate.

The compressive force can be applied through a separate compression surface, which is arranged in connection with the cellulosic material mass to achieve a more uniform effect of the compressive force.

According to the invention the step a) obtaining the moist cellulosic by adding liquid to the cellulosic material mass is performed prior to the steps of b) arranging the plant seeds to the cellulosic material mass, and c) arranging the cellulosic material mass on the surface of the base. Alternatively, the step c) arranging the cellulosic material mass on the surface of the base is performed prior to the steps of a) obtaining the moist cellulosic material by adding liquid to the cellulosic material mass, and b) arranging the plant seeds to the cellulosic material mass. Alternatively, the step b) arranging the plant seeds to the cellulosic material mass is performed prior to the steps of a) obtaining the moist cellulosic material by adding liquid to the cellulosic material mass, and c) arranging the cellulosic material mass on a surface of a base.

In other words, there are several alternative ways of performing the method steps. Some cellulosic materials require moisture because it will make the cellulosic material expand creating open spaces between the fibrous substances of the cellulosic material which enables the entanglement between the fibrous substances. Alternatively, some of the cellulosic material perform better if it is first spread out completely dry on the surface of the base and then liquid is added, for example by spraying with water. The cellulosic material will absorb the water really fast and distribute it out within the cellulosic material so no agitation of the fibrous substance of the cellulosic material is necessary to achieve suitable moisture level in the cellulosic material mass. Also alternatively, some plant seeds are not immediately affected by moisture to start growing, so in those cases the plant seeds can be arranged in a cellulosic material mass before the liquid is added.

According to the invention the steps of arranging the plant seeds to the cellulosic material mass and arranging the cellulosic material mass on the surface of the base are performed prior to the step of obtaining the moist cellulosic material by adding liquid to the cellulosic material mass.

In other words, the plant seeds can be arranged to the cellulosic material mass prior the liquid is added as described above, and also the cellulosic material mass can be arranged at the surface of the base before the liquid is added to the cellulosic material mass. In still other words, the plant seeds are mixed into the cellulosic material mass, then the cellulosic material mass comprising the plant seeds is spread out on the surface of the base, then sprayed with water. Water will be absorbed by the fibrous substances of the cellulosic material mass and spread out throughout the cellulosic material mass very fast, and the seeds can still be safe. Unabsorbed water is avoided so that the risk of premature germination of the plant seeds can be avoided.

According to the invention arranging the plant seeds to the cellulosic material mass is provided by spreading the plant seeds on a surface of a layer of the cellulosic material mass.

In other words, one way to arrange the plant seed to the cellulosic material mass is to spread them on the surface of the layer of the cellulosic material mass, and when the compressive force is applied to the cellulosic material mass to form the single-layer structure, the plant seeds sink into the cellulosic material mass and attach to the intertwined structure of the fibrous substances of the cellulosic material mass, so that the plant seeds are attached inside the formed sheet substrate.

According to the invention arranging the plant seeds to the cellulosic material mass is provided by mixing the plant seeds together with the cellulosic material mass.

In other words, another example of arranging the plant seeds in the cellulosic material mass is to combine the plant seeds and the cellulosic material mass by mixing them together.

According to the invention the step of applying a compressive force to the cellulosic material mass arranged on the surface of the base to form a sheet substrate comprising plant seeds comprises arranging a pressing plate on the cellulosic material mass such that the cellulosic material mass is provided between the surface of the base and the pressing plate and applying the compressive force to the cellulosic material mass through the pressing plate.

In other words, the compressive force is applied through the pressing plate to modify the cellulosic materially throughout and form a uniform single-layer sheet substrate from the cellulosic material mass. Pressing through the pressing plate also contributes to pushing the plant seeds into the cellulosic material mass and thus into the sheet substrate that is formed.

According to the invention the method further comprises the following step: e) drying the single-layer sheet substrate having plant seeds embedded in the single-layer sheet substrate to a water content of less than 20% by mass.

In other words, after applying the compressive force to the cellulosic material mass arranged on the surface of the base the formed single-layer sheet substrate is dried to a dry state in which the water content is below 20% by mass. The drying of the single-layer sheet substrate is carried out quickly after pressing, so that the plant seeds do not have time to be in a moist environment long enough to start germinating.

An advantage of the invention is that the sheet substrate has a single layer structure without any layering which provides even growth conditions for microgreens. Another advantage of the structure of the sheet substrate as well as of the method for producing the sheet substrate is that there is no adhesive used to form the sheet substrate nor to attach the plant seeds to the sheet substrate. Instead, the structure of the sheet substrate and especially the intertwining of the fibrous substances of the cellulosic material mass attach the plant seeds to the sheet substrate. Further advantage of the invention is that sheet substrate having a single-layer fibrous structure is capable of wetting from the wick of the substrate support when placed in a substrate support to an indoor garden device and does not need complete soaking, but it can keep a suitable constant moisture level all the time in the indoor garden device.

### BRIEF DESCRIPTION OF THE DRAWINGS

The invention is described in detail by means of specific embodiments with reference to the enclosed drawings, in which
Figure 1 shows a sheet substrate according to the invention;
Figure 2 shows the sheet substrate shown in figure 1 in a growing state; and
Figures 3a and 3b show an example of the method for producing a sheet substrate.

### DETAILED DESCRIPTION OF THE INVENTION

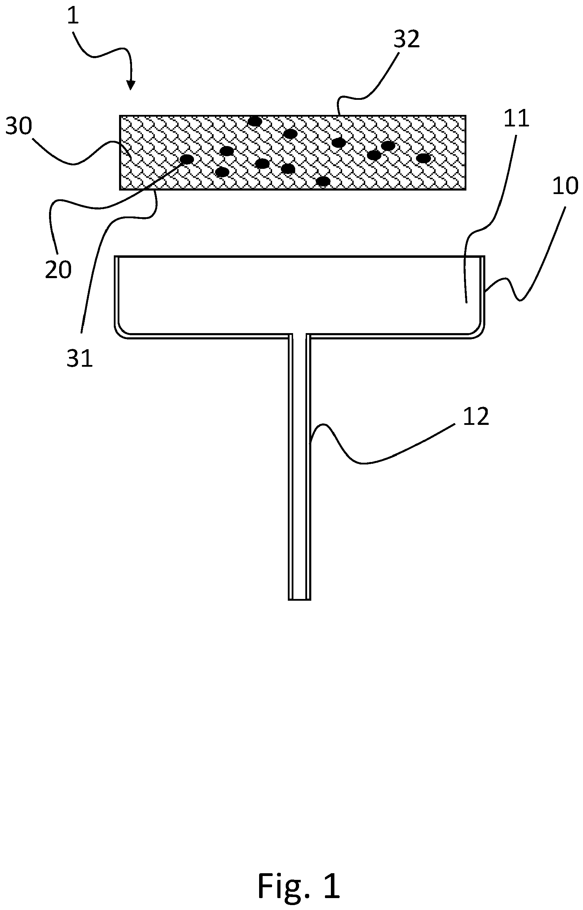

Figure 1 shows a sheet substrate 1 according to the invention which the sheet substrate 1 comprises a cellulosic material mass 30, and plant seeds 20 embedded in the cellulosic material mass 30. The sheet substrate 1 has a single-layer structure meaning that there is just one layer forming the entire sheet substrate 1 and the cellulosic material mass 30 forms the whole volume of the single-layer structure. The substances of the cellulosic material mass form an intertwined structure which keeps the plant seeds 20 inside the sheet substrate 1. In figure 1 the sheet substrate 1 has been placed to a substrate support 10 of an indoor garden device in which plants are grown indoors under controlled light conditions with regular watering from a water tank. However, the sheet substrate 1 according to the invention can be used in other growing places and other growing conditions than in the indoor garden devices. The substrate support 10 comprises a place 11 for the substrate 1 and a wick 12 arranged to provide a flow connection from outside the substrate support 10 to the sheet substrate 1 arranged to its place 11 on the substrate support 10. The substrate support 10 and the sheet substrate 1 are to be arranged to the indoor garden device. The place 11 for the sheet substrate 1 is arranged to hold the sheet substrate 1 such that a lower surface 31 of the sheet substrate 1 is placed against the substrate support 10 and an upper surface 32 of the sheet substrate 1 faces away from the substrate support 10. The wick 12 supplies water from a water tank of the indoor garden device to the sheet substrate 1 placed on the substrate support 10. The sheet substrate 1 is thus watered through the bottom of the sheet substrate 1, i.e., through the lower surface 31 of the sheet substrate 1. The wick 12 may comprise a channel for supplying liquid by capillary action or bunch of fibers for supplying liquid by capillary action or even only one or two thick fibers for supplying liquid by capillary action.

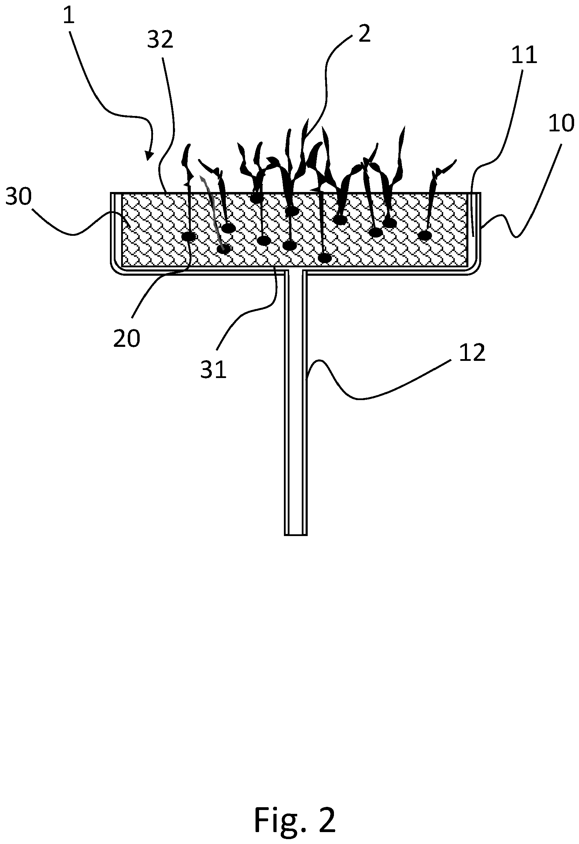

Figure 2 shows the sheet substrate 1 shown in figure 1 placed in the substrate support 10 and the microgreens in a growing state. The water is supplied through the wick 12 to the lower surface 31 of the sheet substrate 1 by capillary action. Since the sheet substrate 1 has the single-layer structure and the whole volume of sheet substrate is cellulosic material mass, the liquid, here especially water, when encountering the bottom of the sheet substrate, i.e., the lower surface 31 of the sheet substrate 1, is completely absorbed through the sheet substrate 1 such that the plant seeds 20 embedded in the sheet substrate 1 get water too. These plant seeds 20 are germinating and have already protruded from the upper surface 32 of the sheet substrate 1 in figure 2. Since the microgreens are harvested in an early stage, for example in 2 weeks after germinating, they do not need much growing space in the sheet substrate 1. The sheet substrate 1 having the plant seeds embedded is therefore preferably only between 2 mm - 10 mm thick when it is ready to use for growing microgreens.

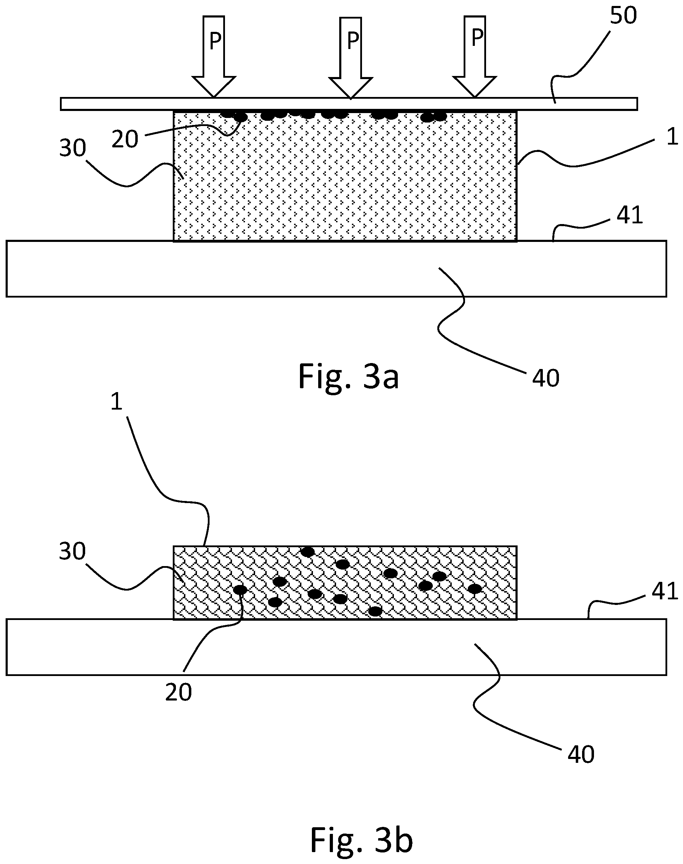

Figures 3a and 3b show an example of the method for producing a sheet substrate. Figure 3a shows a cellulosic material mass 30 comprising fibrous substances that is placed on a surface 41 of a base 40. The base 40 can be any kind of base having preferably a substantially flat and smooth surface 41, for example a table surface or a mold surface. In this example plant seeds 20 are provided on a surface of a layer of the cellulosic material mass 30. The cellulosic material mass 30 comprises only fibrous substances which are preferably all the same kind of substances but alternatively can comprise different kind of fibrous substances such as a combination of different fibres. In a preferable embodiment the cellulosic material mass is homogeneous material mass. The cellulosic material mass does not comprise any adhesives or additives. The cellulosic material mass is moist when the compressive force is applied to the whole volume of the cellulosic material mass 30.

A pressing plate 50 is provided on the surface of the layer of the cellulosic material mass 30 comprising the plant seeds 20, and compressive force P is applied to the whole volume of the cellulosic material mass 30 to form a single-layer sheet substrate 1 having plant seeds 20 embedded in the single-layer sheet substrate 1. The pressing plate 50 is arranged on the cellulosic material mass 30 such that the cellulosic material mass 33 together with the plants seeds is provided between the surface 41 of the base 40 and the pressing plate 50. The compressive force P is applied to the cellulosic material mass 30 through the pressing plate 50 in this example. The pressing plate 50 can be replaced with another pressing tool or even with pressing the cellulosic material mass with a hand, but it is preferably to have a smooth pressing surface and apply compressive force uniformly so that the plant seeds 20 become embedded in the formed sheet substrate 1.

Figure 3b shows the sheet substrate 1 after the compressive force P is applied to the cellulosic material mass 30. The plant seeds 20 are pressed together with the cellulosic material mass 30 and they sink inside the cellulosic material mass 30. The cellulosic material mass 30 is modified through pressing into a dense sheet substrate 1 such that the fibrous substances get entangled and form the intertwined structure in which the plant seeds adhere without any adhesives. The figure 3b shows the sheet substrate 1 after pressing in which the fibrous substances have adhered and entangled together and form a felted single-layer structure because of the compression. The cellulosic material mass will stay together because the fibrous substances get entangled and stay intact after drying.

The invention has been described above with reference to the examples shown in the figures. However, the invention is in no way restricted to the above examples but may vary within the scope of the claims.

## Claims

1. A sheet substrate (1) for growing microgreens (2), **characterized in that** the sheet substrate (1) comprises:
a cellulosic material mass (30), and
plant seeds (20) embedded in the cellulosic material mass (30) forming the sheet substrate (1),
the sheet substrate (1) having a single-layer structure formed by the cellulosic material mass (30) in such a way that substances of the cellulosic material mass (30) form an intertwined structure in a compressed form, the intertwined structure keeping the plant seeds (20) embedded to the sheet substrate (1).

2. A sheet substrate (1) according to claim 1, **characterized in that** thickness of the sheet substrate (1) comprising embedded plant seeds (20) in the compressed form is:
between 2 mm - 20 mm, or
preferably between 2 mm - 10 mm, or
most preferably between 3 mm - 8 mm.

3. A sheet substrate (1) according to any preceding claim, **characterized in that** the cellulosic material mass (30) comprises at least one of the following:
paper pulp, hemp, cotton, wood pulp, coconut pulp, bamboo, cotton fibres, coir, coco peat, jute, hemp, hair, wool, other lignocellulosic plant material, cellulosic fibre, mechanical pulp, thermomechanical pulp (TMP), chemical pulp, Kraft pulp, recycled pulp, and old corrugated cardboard (OCC).

4. A sheet substrate (1) according to any preceding claim, **characterized in that** the intertwined structure of the cellulosic material mass (30) is formed by mechanical treatment of the whole volume of the cellulosic material mass (30) to form the sheet substrate (1) with the single-layer structure.

5. A sheet substrate (1) according to any preceding claim, **characterized in that** the substances of the cellulosic material mass (30) are fibrous substances forming the intertwined structure of the sheet substrate (1).

6. A sheet substrate (1) according to claim 5, **characterized in that** the plant seeds (20) are embedded in the fibrous substances of the cellulosic material mass (30), and the intertwined structure of the fibrous substances is arranged to secure the seeds in the sheet substrate (1).

7. A sheet substrate (1) according to any preceding claim, **characterized in that** the plant seeds (20) are entangled in the cellulosic material mass (30), and the intertwined structure of the cellulosic material mass (30) is arranged to secure the plant seeds (20) in the sheet substrate (1).

8. A sheet substrate (1) according to any preceding claim, **characterized in that** the plant seeds (20) are embedded in the sheet substrate (1), or
the plant seeds are completely embedded inside the sheet substrate (1), or
the plant seeds are at least partially embedded inside the sheet substrate (1).

9. A growing arrangement for growing microgreens in an indoor garden device, the growing arrangement comprises a substrate support (10) and a substrate (1) containing plant seeds (20), the substrate support (10) comprises a place (11) for the substrate (1) and a wick (12) which is arranged to form a flow connection from outside of the substrate support (10) to the substrate (1) arranged in the substrate support (10), the substrate support (10) and the substrate (1) are to be placed to the indoor garden device, **characterized in that** the substrate is a sheet substrate (1) according to any of the claims 1-8.

10. Method for producing a sheet substrate (1) for growing microgreens, **characterized in that** the method comprises the following steps:
a) obtaining moist cellulosic material with a water content of 20-95% by mass by adding liquid to the cellulosic material mass (30),
b) arranging plant seeds (20) to the cellulosic material mass (30),
c) arranging the cellulosic material mass (30) on a surface (41) of a base (40), and
d) applying a compressive force to the cellulosic material mass (30) arranged on the surface (41) of the base (40) to form a single-layer sheet substrate (1) having plant seeds (20) embedded in the single-layer sheet substrate (1).

11. Method according to claim 10, **characterized in that**:
- the step a) obtaining the moist cellulosic material by adding liquid to the cellulosic material mass (30) is performed prior to the steps of:
b) arranging the plant seeds (20) to the cellulosic material mass (30), and
c) arranging the cellulosic material mass (30) on the surface (41) of the base (40); or
- the step c) arranging the cellulosic material mass (30) on the surface of the base is performed prior to the steps of:
a) obtaining the moist cellulosic material by adding liquid to the cellulosic material mass (30), and
b) arranging the plant seeds (20) to the cellulosic material mass (30); or
- the step b) arranging the plant seeds (20) to the cellulosic material mass (30) is performed prior to the steps of:
a) obtaining the moist cellulosic material by adding liquid to the cellulosic material mass (30), and
c) arranging the cellulosic material mass (30) on a surface (41) of a base (40).

12. Method according to claim 10, **characterized in that** the steps of arranging the plant seeds (20) to the cellulosic material mass (30) and arranging the cellulosic material mass (30) on the surface (41) of the base (40) are performed prior to the step of obtaining the moist cellulosic material by adding liquid to the cellulosic material mass (30).

13. Method according to any of claims 10-12, **characterized in that** arranging the plant seeds (20) to the cellulosic material mass (30) is provided by spreading the plant seeds (20) on a surface of a layer of the cellulosic material mass (30).

14. Method according to any of claims 10-12, **characterized in that** arranging the plant seeds (20) to the cellulosic material mass (30) is provided by mixing the plant seeds (20) together with the cellulosic material mass (30).

15. Method according to any of claims 10-14, **characterized in that** the step of applying a compressive force to the cellulosic material mass (30) arranged on the surface (41) of the base (40) to form a sheet substrate (1) comprising plant seeds (20) comprises
arranging a pressing plate on the cellulosic material mass (30) such that the cellulosic material mass (30) is provided between the surface (41) of the base (40) and the pressing plate (50), and
applying the compressive force to the cellulosic material mass (30) through the pressing plate (50).

16. Method according to any of claims 10 - 15, **characterized in that** the method further comprises the following step:
e) drying the single-layer sheet substrate (1) having plant seeds (20) embedded in the single-layer sheet substrate (1) to a water content of less than 20% by mass.
